# EUROPÄISCHE PATENTSCHRIFT

(11) **EP 1 082 904 B1**
(45) Veröffentlichungstag und Bekanntmachung des Hinweises auf die Patenterteilung: **22.03.2006**
(21) Anmeldenummer: 00119773.0
(22) Anmeldetag: 11.09.2000
(51) Int. Cl.: A21C 11/00, A21B 5/02

(54) **Verfahren und Pressform zur Herstellung von gebackenen Formkörpern**
Process and press-forming die for making baked shaped articles
Procédé et moule de pressage pour la production de corps mis en forme cuits au four

(30) Priorität: 10.09.1999 DE 19943239
(43) Veröffentlichungstag der Anmeldung: 14.03.2001
(73) Patentinhaber: Thiele, Marion, 01277 Dresden (DE)
(72) Erfinder: Thiele, Marion, 01277 Dresden (DE); Linke, Wolfgang, 01237 Dresden (DE)
(74) Vertreter: Lippert, Stachow & Partner

(56) Entgegenhaltungen:
- EP-A- 0 752 209
- WO-A-92/10938
- DE-A- 3 102 410
- DE-A- 3 536 249
- DE-C- 19 646 752
- US-A- 3 963 402
- US-A- 4 303 677
- US-A- 4 417 867
- US-A- 5 693 355

## Beschreibung

Die Erfindung betrifft ein Verfahren zur Herstellung von gebackenen Formkörpern aus unter Verwendung von Getreidemehl hergestellten formbaren und triebmittelfreien Festteig, der als Teigrohling in eine Pressform, bestehend aus Unter- und Oberform, eingebracht wird und in dieser Pressform gebacken wird.

Die Erfindung betrifft auch eine Pressforzn zur Herstellung von gebackenen Formkörpern mit einer eine Inversform der Unterseite eines Formkörpers aufweisende Unterform und einer eine Inversform der Oberseite des Formkörpers aufweisende Oberform, die unter Zwischenlegen des Teigrohlings auf die Unterform auflegbar ist, wobei die Unterform Dampfaustrittsöffnungen aufweist und die Oberform und Unterform während des Backprozesses relativ zueinander und geradlinig beweglich und arretierbar sind.

Es ist allgemein bekannt, bei der Herstellung von Waffeln, Pizza- oder Tortenböden in verschiedenster Art und für verschiedenste Verwendungszwecke feuchten, elastischen Teig üz eine Pressform, bestehend aus Unter- und Oberform, zu bringen. So ist in der deutschen Patentschrift DE 2841398 C2 ein Verfahren einschließlich einer Vorrichtung zur Durchführung des Verfahrens offenbart, wobei Teigstücke in einer aus Patrize und Matrize bestehenden Presse breitgedrückt und geplättet werden, und in der Elastizität des Teiges begründete Schmierkräfte, die eine gleichmäßige Ausbreitung des Teiges verhindern würden, durch ein Luftkissen zwischen Teig und Patrize überwunden werden. In der österreichischen Patentschrift AT 335 940 wird eine handbetriebene Pressvorrichtung aufgezeigt, die ebenfalls der Formgebung des Teigstückes dient. Ein Verfahren zur Herstellung eines geformten Teigproduktes ist aus der amerikanischen Patentschrift US 21 11 021 bekannt. Hierbei erfolgt die Formung während einer kontinuierlichen Wärmezufuhr wiederum durch entsprechende Formplatten, wobei der Abstand zwischen diesen während der Formung größer ist, als die Teigdicke um dem den aus der Erhitzung resultierenden Volumensanwachs zu berücksichtigen. Schließlich ist in der amerikanischen Patentschrift US 54 05 627 ein Verfahren zur Herstellung eines speziellen Pizzakruste beschrieben, wobei ein Teigstück in eine Grundform gelegt wird, eine Deckform daraufgepresst wird, anschließend ein zweites Teigstück über dem bereits geformten Grundstück mittels einer zweiten Deckform ebenfalls entsprechend druckgeformt wird. Die beschriebene, zur Durchführung des Verfahrens erforderliche Vorrichtung weist in mindestens einer der Deckformen runde Absätze auf, mit denen während des Pressvorgangs Löcher in den Teig gebohrt werden sollen um eine gegeseitige Durchsetzung der sich überlagernden Teigmassen zu erreichen. Ein Entweichen des eventuell entstehenden Dampfes ist hierbei jedoch nicht vorgesehen.

Soweit Verfahren und Vorrichtungen zum Formen des Teiges unter Wärmezufuhr zum Einsatz kommen, wird durch die Wärmeenergie das im Teig befindliche Wasser verdampft und somit ein nahezu restfeuchtefreies Produkt geschaffen, welches zu einer Weiterverarbeitung geeignet ist.

Sofern das Ausdampfen des Wassers unter Druck stattfindet, führt dies dazu, daß eine gewünschte aufgelockerte Struktur des geformten Produkts entsteht, deren sensorische Eigenschaften, d.h. der Kaueindruck, das Produkt kennzeichnen. Nachteilig ist bei dieser Struktur die Neigung zu einer Feuchtigkeitsaufnahme, die zum Verlust der sensorischen Eigenschaften führt.

Den oben genannten Verfahren und Vorrichtungen ist gemein, daß diese - ihrer jeweiligen Erfindungsintention nach - lediglich bei der Herstellung von zum sofortigen oder baldigen Verzehr gedachter Produkte zum Einsatz kommen.

Unter Anwendung derartiger Backtechnologien werden jedoch auch Formkörper hergestellt, die zu Verpackungszwecken, vorrangig im fast-food-Bereich vorgesehen sind. Bei diesen Produkten kommt der geschilderte Nachteil zum Tragen, indem diese nicht zur Aufbewahrung oder Verpackung von feuchten Materialien, etwa von Speisen oder Getränken geeignet sind.

In der deutschen Patentschrift 196 46 752.7 ist ein Verfahren zur Herstellung eines Einwegbehältnisses angegeben, das unter Verwendung von Teig aus Getreidemehl, die Herstellung derartiger Behältnisse beschreibt, die für die Aufbewahrung auch feuchter Materialien geeignet sind.

Dabei ist der Teig als ein Festteig vorgesehen, der u.a. aus einer Getreidemehlmischung mit einem wasseranteil von 30% bis 35% besteht. Aus diesem gekneteten Festteig wird ein Teigrohling in eine Pressform eingebracht und in dieser Pressform gebacken. Durch den relativ geringen wasseranteil wird vermieden, dass es zu einer starken Dampfentwicklung innerhalb der Pressform kommt, die regelmäßig zu einer Strukturveränderung des Einwegbehältnisses infolge des Bestrebens zum Austritt aus der Pressform bewirken würde.

Allerdings hat sich gezeigt, dass mit diesem angegebenen Backverfahren Einwegbehältnisse herstellbar sind, die zwar den Anforderungen an eine hohe Festigkeit und Durchfeuchtungsresistenz gerecht werden, aber nur eine unzufriedenstellende Oberflächenqualität und eine geringe Verdichtung aufweisen.

In der Europäischen Patentschrift 752 209 wird ein weiteres Verfahren zur Herstellung essbarer Behältnisse aus einem flüssigen oder pastösen Teig beschrieben, welches in zwei Vorbackphasen und dem daran anschließenden Fertigbacken abläuft. In der ersten Vorbackphase findet während des Zusammenführens der zweiteiligen Backform die Formgebung unter Ausnutzung Dampfentwicklung im Teig und dem damit vonstatten gehenden Aufquellen des Teiges statt. So entsteht ein poröser formkörper mit blasenartiger Struktur, der in der zweiten Backphase mit weiter entfernteren Backformen weiter quellen kann und so gebacken wird, bevor in der Phase des Fertigbackens der Oberflächenbereich der Behältniswandung verdichtet wird und das Behältnis so die gewünschte Stabilität erhält.

Ein vergleichbares Verfahren, jedoch für festen Teig wird in der PCT-Schrift 92/10938 beschrieben. Mit dem geringeren Wasseranteil des Teiges soll eine zu starke Dampfentwicklung vermieden werden. Für die Formgebung wird jedoch das Aufblasen des Teiges in einer ersten Vorbackphase ebenfalls genutzt, hier jedoch infolge des Triebmittel des Teiges. In dem folgenden durch mehrmaliges Öffnen und Schließen der Backform sowie Kompression des vorgebackenen Behältnisses gekennzeichneten Verfahren werden die Oberflächen des Behältnisses verschmolzen, ausgehärtet und verdichtet, um dem Behältnis die Formstabilität zu geben. Die Durchfeuchtungsresistenz ist zwar grundsätzlich über die Kompression der Oberflächenschicht beeinflussbar, wird aber durch die in der Mittelschicht nach dem Herstellungsverfahren immer noch vorhandene blasenartige Struktur der Mittelschicht stark begrenzt. Lediglich für die nicht essbaren Behältnisse auf Stärkebasis ist durch die stark verdichtete Oberflächenschicht eine bessere Durchfeuchtungsresistenz erzielbar.

Auch die weiteren aus den Patenschriften US 4,303,690 und AT-PS 240 309 bekannten Verfahren nutzen ebenfalls den Volumenzuwachs des Teiges durch Dampfdruckentwicklung und/oder durch den Triebmittelzusatz in der Rezeptur zum Ausfüllen der Form, was infolge dessen stets zu einer blasenartigen Struktur führt, der in den weiteren Schritten in einer mehr oder weniger dicken Oberflächenschicht verfestigt und verdichtet wird.

Neben der begrenzten Durchfeuchtungsresistenz vor allem für essbare Behältnisse besteht ein weiterer Nachteil dieser drei Verfahren in der Notwendigkeit, in den dem Vorbackprozess folgenden Verfahrensschritten das bekannte, den Backprozess verlängernde Wippen, ein mehrfaches Öffnen und Schließen der Form vorzunehmen. Dieses Wippen ist jedoch erforderlich, um die bei fortschreitendem Backprozess entstehenden Dämpfe und Gase frei zu lassen und dabei die abschließende oder erhaltende Formgebung des immer noch treibenden Teiges zu erzielen.

Das in der PCT-Patentschrift 98/00027 beschriebene Verfahren umgeht dieses Wippen durch eine sehr kurze, nur bis zum Erreichen der Dampfdruckspitze dauernden Vorbackphase, der sich wiederum die Kompressionsphase zur Verdichtung der Oberflächenschicht des geschäumten Backgutes und gegebenenfalls eine nachfolgende Konditionierung auf einen gewünschten Feuchtigkeitsgehalt anschließen. Diese nachträgliche Konditionierung stellt insbesondere für eine Massenproduktion einen externen, Aufwand und Kosten erzeugenden Verfahrensschritt dar. Im übrigen sind mit diesem Verfahren im Ergebnis wiederum nur Behältnisse mit blasiger, poröser Mittelstruktur und lediglich verdichteter Oberfläche herstellbar, mit denen eine länger anhaltende Durchfeuchtungsresistenz nicht erzielbar ist.

Die Aufgabe der Erfindung besteht nun darin, ein Verfahren und eine Pressform zur Herstellung von gebackenen Formkörpern anzugeben, um eine Massenproduktion von derartigen Formkörpern kostengünstiger zu gestalten und die Form- und Oberflächenqualität sowie die Verdichtung zu verbessern.

Diese Aufgabe wird verfahrensseitig dadurch gelöst, dass der Backvorgang mindestens in drei Phasen durchgeführt wird. So weist der Backvorgang eine Formgebungsphase auf, in der die Unter- und Oberform in einem vorgeheizten Zustand unter Formung des tablettenförmigen Teigrohlings durch Pressung zu einem Formkörperrohling und unter Ausübung einer ersten Presskraft bis auf einen Abstand zusammengeführt werden, der einer derartigen Wandungsstärke des Formkörperrohlings entspricht, bei welcher der durch den Abstand gebildete Raum vollständig durch das Material des Teigrohlings ausgefüllt wird. Dieser Formgebungsphase schließt sich eine Vorbackphase an, in der die erste Presskraft dadurch verringert oder ausgeschalten wird, indem die Unter- und die Oberform um einen zum Abstand geringeren Zusatzabstand voneinander entfernt werden. Danach wird der Formkörperrohling unter nahezu atmosphärischem Druck vorgebacken. Schließlich weist der Backvorgang eine anschließende Kompressionsphase auf, in der die Unter- und die Oberform unter Ausübung einer zweiten Presskraft auf den Formkörperrohling bis auf einen Abstand, der der Wandungsstärke des Formkörpers entspricht, zusammengeführt werden. Der Formkörperrohling wird in dieser Stellung zu dem Formkörper ausgebacken.

In der Formgebungsphase wird aus dem Teigrohling ein Formkörperrohling durch Pressen erzeugt. Dadurch, dass die Pressform vorgeheizt ist, findet ein erstes Erstarren des Teigmateriales statt, so dass der Formkörperrohling eine grundlegende Formbeständigkeit zeigt. Indem der Teigrohling in Tablettenform eingebracht wird, sind in einfacher Art und Weise eine Automatisierung möglich und die Dosierung ist genau festlegbar. In der anschließenden Vorbackphase kann die in dem Teig vorhandene Feuchtigkeit frei entweichen, wodurch eine Zerstörung der Materialkonsistenz, etwa durch ein Aufschäumen, wie beim Waffelbacken, vermieden wird. Die anschließende Kompressionsbackphase realisiert dann eine gute Oberflächenstruktur und eine hohe Festigkeit des Formkörpers.

Im Vergleich zu herkömmlichen Backverfahren wird hier eine hohe Festigkeit des Formkörpers durch ein Verpressen des Teiges während des Backvorganges erreicht.

In der Vorbackphase kann ein Großteil der Feuchtigkeit entweichen, so dass während des Backprozesses im Inneren der Pressform nur ein - im Vergleich beispielsweise zum bekannten Waffel backverfahren - geringer Dampfdruck entsteht. Dadurch kann der Aufwand zum Zusammenhalten der Preßform minimiert werden. Beim bekannten Waffelbackverfahren werden zur Bewältigung der dort auftretenden Dampfdrücke erhebliche Zuhaltemechanismen benötigt.

In einer ersten Ausgestaltung des Verfahrens ist die Dauer der Kompressionsphase größer als die Dauer der Vorbackphase und diese wiederum größer als die Dauer der Formgebungsphase. Dadurch wird erreicht, daß die Feuchtigkeit unproblematisch entweichen kann und eine sehr gute Verpressung bewirkt wird.

In weiteren einer Ausgestaltung ist die zweite Preßkraft grö-βer als die erste Preßkraft, da die erste Preßkraft nur der Formgebung dient, die zweite Preßkraft jedoch die Festigkeit und Oberflächenqualität bestimmt.

In einer weiteren Ausgestaltung des Verfahrens beträgt die Backtemperatur in der Preßform zumindest in der in der Kompressionsbackphase 160°C bis 220°C. Dabei ist es besonders zweckmäßig, eine Backtemperatur zwischen 180°C bis 190°C zu wählen. Mit der Backtemperatur kann die Geschwindigkeit des Ausbackens beeinflußt werden. Sie wird in Abhängigkeit der Form des Formkörpers und von der beabsichtigten Farbe zu wählen sein.

Es ist zweckmäßig, die Preßform in der Formgebungsphase auf Backtemperatur vorzuheizen. Dadurch kann der Formgebungsvorgang beschleunigt werden. Damit kann auch ein Temperaturwechsel vermieden werden, der bei der Massenproduktion erhebliche Behinderungen mit sich bringen würde.

Diesem Ziel dient auch eine Ausgestaltung des erfindungsgemäßen Verfahrens, wonach die Backtemperatur in der Formgebungs-, der Vorback- und der Kompressionsbackphase im wesentlichen konstant gehalten wird.

Besonders zweckmäßig ist es, die Gesamtbackzeit zwischen 2 bis 6 Minuten zu wählen. Innerhalb dieser Zeit ist es möglich, eine vollständige Formgebung zu realisieren, ohne mit besonders hohen Backtemperaturen oder mit besonders geringem Materialeinsatz arbeiten zu müssen.

Besonders zweckmäßig ist es, einen Teig mit einem Flüssigkeitsanteil von näherungsweise 30 Vol.% einzusetzen. Damit wird gewährleistet, dass der Teig einerseits eine gute Formbarkeit hat und andererseits nur soviel Feuchtigkeit enthält, die während der Vorback- und der Kompressionsbackphase zerstörungsfrei entweichen kann.

Die erfindungsgemäße Aufgabenstellung wird auch durch eine Pressform gelöst, bei der auch die Oberform mit Dampfaustrittsöffnungen versehen ist, die eine erste Öffnung in der Innenseite und eine zweite Öffnung zur Außenseite der Oberform aufweisen.

Dadurch wird es möglich, die drei Phasen während des Backprozesses zu realisieren.

Indem sowohl die Unterform als auch die Oberform mit Dampfaustrittsöffnungen versehen sind, welche eine direkte und, bezogen auf die Oberflächen des Formkörperrohlings, beiderseitige Dampfableitung aus dem Inneren der Pressform nach außen unterstützten, kann über diese Dampfaustrittsöffnungen insbesondere während der Kompressionsbackphase Feuchtigkeit entweichen, so dass sich in dieser Phase der mechanische Pressdruck auf den Formkörper auswirkt und nicht der Dampfdruck.

Sind die Dampfaustrittsöffnungen beispielsweise sowohl in einem randfernen Innenbereich als auch in einem randnahen Außenbereich der Unterform und der Oberform angeordnet, wird es möglich, einen gleichmäßigen Dampfaustritt zu gewährleisten, ohne dass es zu lokalen Dampfdruckerhöhungen kommt. Im Übrigen kann die Zahl der Dampfaustrittsöffnungen möglichst groß gewählt werden, wodurch einerseits das lokale Auftreten von Dampfdruckerhöhungen noch weiter vermindert werden kann. Andererseits ist es damit möglich, die Dampfaustrittsöffnungen klein zu halten, was eine Beeinträchtigung der Oberflächenqualität vermindern hilft.

Die Pressform kann dadurch weitergebildet werden, dass die Unterform und/oder die Oberform selbst geteilt sind.

Dabei ist es weiterhin möglich, dass die Fügekanten zwischen Unterform und Oberform oder zwischen den Formteilen der Unterform und/oder der Oberform als Dampfaustrittsöffnungen ausgebildet sind, wodurch eine Dampfentspannung in der Pressform und somit eine Verdichtung des Formkörpers durch die mechanische Presskraft weiter unterstützt wird.

In einer zweckmäßigen Ausgestaltung ist vorgesehen, dass die Dampfaustrittsöffnungen als Kanäle in der Unter- und/oder in der Oberform ausgebildet sind, die eine erste Öffnung in der jeweiligen Innenseite der Unter- und/oder der Oberform und eine zweite Öffnung zur jeweiligen Außenseite der Unter- und/oder der Oberform aufweisen.

Diese Kanäle ermöglichen eine gezielte Führung des Dampfes. Damit wird es auch möglich, in der Pressform Sammelkanäle auszubilden, in die die einzelnen Kanäle münden.

In einer Ausgestaltung ist vorgesehen, dass die erste Öffnung dadurch realisiert wird, dass der jeweilige Kanal als zu der jeweiligen Innenseite hin zumindest teilweise offener Kanal ausgebildet ist.

Zwar kann dies zu einer Abbildung auf der Oberfläche des Formkörpers führen. Allerdings können die Kanäle dann so gewählt werden, daß deren Abbildung zielgerichtet als Gestaltungsmittel eingesetzt wird.

Die Erfindung soll nachfolgend anhand eines Ausführungsbeispieles näher erläutert werden. In den zugehörigen Zeichnungen zeigt
- Fig. 1: eine schematische Explosivdarstellung der inneren Ausformungen einer Preßform
- Fig. 2: einen Querschnitt durch eine Preßform und
- Fig. 3: eine Prinzipdarstellung des erfindungsgemäßen Verfahrens.

Wie in den Zeichnungen dargestellt, besteht die erfindungsgemäße Preßform 1 aus einer Unterform 2 und einer Oberform 3. Die Unterform 2 weist eine Inversform der Unterseite eines Formkörpers 4 und die Oberform 3 eine Inversform der Oberseite des Formkörpers 4 auf. Oberform 3 und Unterform 2 sind während des Backprozesses relativ zueinander beweglich und arretierbar.

Sowohl die Unterform 2 als auch die Oberform 3 sind mit Dampfaustrittsöffnungen sowohl in je einem randfernen Innenbereich 5 als auch in je einem randnahmen Außenbereich 6 der Unterform 2 und der Oberform 3 versehen.

Diese Dampfaustrittsöffnungen sind als Kanäle 7 ausgebildet, die eine erste Öffnung 8 in der jeweiligen Innenseite 9 und 10 der Unter- und der Oberform 2 und 3 und eine zweite Öffnung 11 zur jeweiligen Außenseite der Unter- und der Oberform 2 und 3 aufweisen.

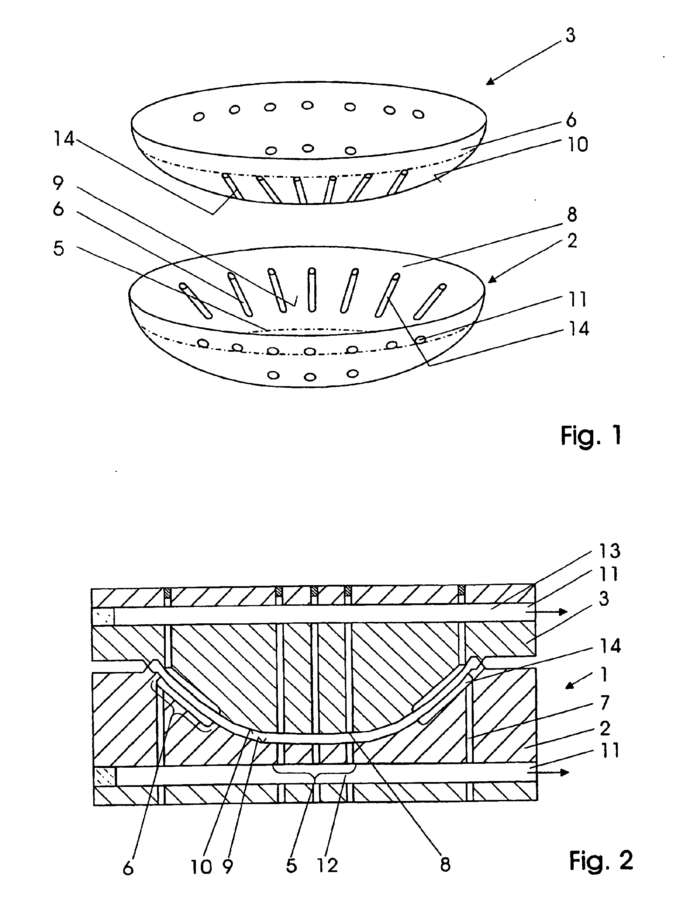

Wie in Fig. 2 dargestellt, ist in der Unterform 2 ein Sammelkanal 12 und in der Oberform 3 ein Sammelkanal 13 angeordnet, die jeweils an einer Seite der Pressform 1 eine Öffnung nach außen haben, die gleichzeitig die zweiten Öffnungen 11 der Kanäle 7 bilden. In diese Sammelkanäle 12 und 13 münden die Kanäle 7 der Dampfaustrittsöffnungen, wodurch dann der Dampf über die Sammelkanäle 12 und 13 nach außen gelangen kann.

Die erste Öffnung 8 wird dadurch realisiert, dass der jeweilige Kanal 7 als zu der jeweiligen Innenseite 9 oder 10 hin offener Kanal 14 ausgebildet ist.

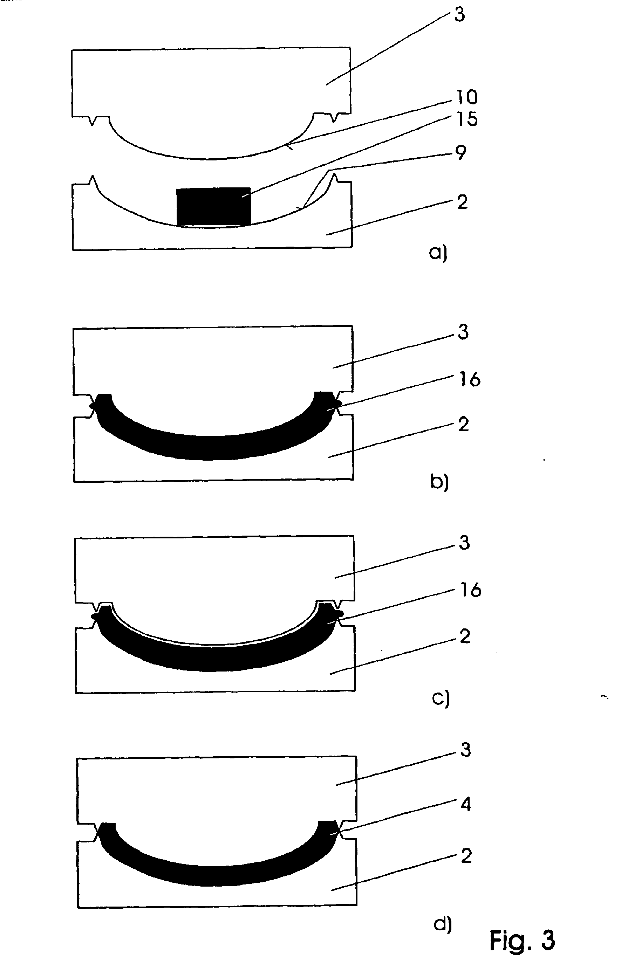

Wie in Fig. 3 a) dargestellt, wird zunächst ein Teigrohling 15 aus einem Festteig in Tablettenform in die Pressform 1 eingebracht.

In der Formgebungsphase gemäß Fig. 3 b) werden Unter- und Oberform 2 und 3, die auf Backtemperatur aufgeheizt sind, mit dem dazwischen befindlichen Teigrohling 15 unter Ausübung einer ersten Presskraft bis auf einen Abstand zusammengeführt werden, der einer derartigen Wandungsstärke des Formkörperrohlings 16 entspricht, bei welcher der durch den Abstand gebildete Raum vollständig durch das Material des Teigrohlings 15 ausgefüllt wird. Dabei wird der Teigrohling 15 zu einem Formkörperrohling 16 geformt. Durch die von der Ausführung der Pressform unterstützte Bewegung der Ober- und Unterform relativ und geradlinig zueinander und deren anschließende Arretierung wird gewährleistet, dass sich der Teigrohling bei der Formgebungsphase nicht verschiebt.

Dieser Formgebungsphase schließt sich eine Vorbackphase gemäß Fig. 3 c) an, in der die erste Presskraft dadurch verringert oder ausgeschalten wird, indem die Unter- und die Oberform 2 und 3 um einen zum Abstand geringeren Zusatzabstand voneinander entfernt werden. Danach wird der Formkörperrohling 16 unter nahezu atmosphärischem Druck vorgebacken.

In anschließenden Kompressionsphase gemäß Fig. 3 d) werden Unter- und Oberform 2 und 3 unter Ausübung einer zweiten Presskraft auf den Formkörperrohling 16, die größer ist als die erste Presskraft, bis auf einen Abstand, der der Wandungsstärke des Formkörpers 4 entspricht, zusammengeführt. Der Formkörperrohling 16 wird in dieser Stellung zu dem Formkörper 4 ausgebacken.

### Bezuqszeichenliste

- 1: Preßform
- 2: Unterform
- 3: Oberform
- 4: Formkörper
- 5: Innenbereich
- 6: Außenbereich
- 7: Kanal
- 8: erste Öffnung
- 9: Innenseite der Unterform
- 10: Innenseite der Oberform
- 11: zweite Öffnung
- 12: Sammelkanal in der Unterform
- 13: Sammelkanal in der Oberform
- 14: offener Kanal
- 15: Teigrohling
- 16: Formkörperrohling

## Patentansprüche

1. Verfahren zur Herstellung von gebackenen Formkörpern aus unter Verwendung von Getreidemehl hergestellten formbarem und triebmittelfreiem Festteig, der als Teigrohling in Tablettenform in eine Pressform, bestehend aus Unter- und Oberform, eingebracht wird und in dieser Pressfortn gebacken wird, indem
- der Backvorgang eine Formgebungsphase aufweist, in der die Unter- und Oberform (2; 3) in einem vorgeheizten Zustand unter Formung des Teigrohlings (15) durch Pressung zu einem Formkörperrohling (16) und unter Ausübung einer ersten Presskraft bis auf einen Abstand zusammengeführt werden, der einer derartigen Wandungsstärke des Formkörperrohlings (16) entspricht, bei welcher der durch den Abstand gebildete Raum vollständig durch das Material des Teigrohlings (15) ausgefüllt wird,
- der Backvorgang eine anschließende Vorbackphase aufweist, in der die erste Presskraft verringert oder ausgeschalten wird, indem die Unter- und die Oberform (2; 3) um einen zum Abstand geringeren zusatzabstand voneinander entfernt werden, und danach der Formkörperrohling (16) unter nahezu atmosphärischem Druck vorgebacken wird und
- der Backvorgang eine anschließende Kompressionsphase aufweist, in der die Unter- und die Oberform (2; 3) unter Ausübung einer zweiten Presskraft auf den Formkörperrohling (16) bis auf einen Abstand, der der Wandungsstärke des Formkörpers (4) entspricht, zusammengeführt werden und der Formkörperrohling (16) in dieser Stellung zu dem Formkörper (4) ausgebacken wird.

2. Verfahren nach Anspruch 1, **dadurch gekennzeichnet , dass** die Dauer der Kompressionsphase größer als die Dauer der Vorbackphase und diese wiederum größer als die Dauer der Formgebungsphase ist.

3. verfahren nach Anspruch 1 oder 2, **dadurch gekennzeichnet, dass** die zweite Presskraft größer ist als die erste Presskraft.

4. Verfahren nach einem der Ansprüche 1 bis 3, **dadurch gekennzeichnet , dass** die Backtemperatur in der Pressform (1) zumindest in der Kompressionsbackphase 160°C bis 220°C beträgt.

5. Verfahren nach Anspruch 4, **dadurch gekennzeichnet, dass** die Backtemperatur 180°C bis 190°C beträgt.

6. Verfahren nach einem der Ansprüche 1 bis 5, **dadurch gekennzeichnet , dass** die Pressform (1) in der Formgebungsphase auf Backtemperatur vorgeheizt ist.

7. Verfahren nach einem der Ansprüche 1 bis 6, **dadurch gekennzeichnet , dass** die Backtemperatur in der Formgebungs-, der vorback- und der Kompressionsbackphase im wesentlichen konstant gehalten wird.

8. Verfahren nach einem der Ansprüche 1 bis 7, **dadurch gekennzeichnet , dass** die Gesamtbackzeit 2 bis 6 Minuten beträgt.

9. Verfahren nach einem der Ansprüche 1 bis 8, **dadurch gekennzeichnet , dass** der Teig einen Flüssigkeitsanteil von näherungsweise 30 Vol.% enthält.

10. Pressform zur Durchführung des Verfahrens nach einem der Ansprüche 1 bis 9 mit einer eine Inversform der Unterseite eines Formkörpers aufweisende Unterform (2) und einer eine Inversform der Oberseite des Formkörpers aufweisende Oberform (3), die unter Zwischenlegen des Teigrohlings auf die Unterform (2) auflegbar ist, wobei die Unterform (2) Dampfaustrittsöffnungen aufweist und die Oberform (3) und Unterform (2) während des Backprozesses relativ zueinander und geradlinig beweglich und arretierbar sind, **dadurch gekennzeichnet, dass** auch die Oberform (3) mit Dampfaustrittsöffnungen versehen ist, die eine erste Öffnung (8) in der Komkauen Innenseite (10) und eine zweite Öffnung (11) zur Außenseite der Oberform (3) aufweisen.

11. Pressform nach Anspruch 10, **dadurch gekennzeichnet, dass** die Unterform (2) und/oder die Oberform (3) selbst geteilt sind.

12. Pressform nach einem der Ansprüche 10 oder 11, **dadurch gekennzeichnet , dass** die Fügekanten zwischen Unterform (2) und Oberform (3) oder zwischen den Formteilen der Unterform (2) und/oder der Oberform (3) als Dampfaustrittsöffnungen ausgebildet sind.

13. Pressform nach einem der Ansprüche 10 bis 12, **dadurch gekennzeichnet , dass** die Dampfaustrittsöffnungen in der Unterform und/oder der Oberform als Kanäle (7) ausgebildet sind, welche eine erste Öffnung (8) in der jeweiligen Innenseite (9; 10) der Unter- und/oder der Oberform (2; 3) und eine zweite Öffnung (11) zur jeweiligen Außenseite der Unter- und/oder der Oberform (2; 3) aufweisen.

14. Pressform nach einem der Ansprüche 10 bis 13, **dadurch gekennzeichnet , dass** die erste Öffnung (8) **dadurch** ausgebildet ist, dass der jeweilige Kanal (7) als zu der jeweiligen Innenseite (9; 10) hin zumindest teilweise offener Kanal (14) ausgebildet ist.

## Claims

1. Method for manufacturing baked shaped bodies made from mouldable and yeast-free firm dough manufactured using cereal flour, said firm dough being inserted as a dough blank into a pressing mould, consisting of a top mould and bottom mould, and being baked in this pressing mould, in that
- the baking process has a shaping phase in which the top mould and bottom mould (2; 3), in a preheated condition with shaping of the dough blank (15), by means of moulding into a shaped body blank (16) and with exertion of an initial press load, are brought together up to a clearance that equates to a wall strength of the shaped body blank (16) at which the space formed by the clearance is completely filled by the material of the dough blank (15),
- the baking process has a subsequent pre-baking phase in which the initial press load is reduced or eliminated in that the top mould and bottom mould (2; 3) are separated from each other by an additional clearance less than the clearance, and the shaped body blank (16) is then pre-baked at almost atmospheric pressure and
- the baking process has a subsequent compression phase in which the top mould and bottom mould (2; 3) are brought together with exertion of a second press load onto the shaped body blank (16) up to a clearance that equates to the wall strength of the shaped body (4) and the shaped body blank (16) is baked through in this position in relation to the shaped body (4).

2. Method according to claim 1, **characterised in that** the duration of the compression phase is greater than the duration of the pre-baking phase and this in turn is greater than the duration of the shaping phase.

3. Method according to claim 1 or 2, **characterised in that** the second press load is greater than the initial press load.

4. Method according to one of claims 1 to 3, **characterised in that** the baking temperature in the pressing mould (1) is 160°C to 220°C, at least in the compression baking phase.

5. Method according to claim 4, **characterised in that** the baking temperature is 180°C to 190°C.

6. Method according to one of claims 1 to 5, **characterised in that** the pressing mould (1) is pre-heated to baking temperature in the shaping phase.

7. Method according to one of claims 1 to 6, **characterised in that** the baking temperature in the shaping phase, the pre-baking phase and the compression phase is largely kept constant.

8. Method according to one of claims 1 to 7, **characterised in that** the total baking time is 2 to 6 minutes.

9. Method according to one of claims 1 to 8, **characterised in that** the dough has a liquid content of approximately 30% by volume.

10. Pressing mould for performing the method according to one of claims 1 to 9 with a bottom mould (2) having an inverse mould of the bottom side of a shaped body, and with a top mould (3) having an inverse mould of the top side of the shaped body (1), which top mould can be applied to the bottom mould (2) with interleaving of the dough blank, the bottom mould (2) having steam outlet openings and the top mould (3) and bottom mould (2) being linearly moveable in relation to each other and lockable during the baking process, **characterised in that** the top mould (3) is also provided with steam outlet openings that have an initial opening (8) in the concave interior (10) and a second opening (11) to the exterior of the top mould (3).

11. Pressing mould according to claim 10, **characterised in that** the bottom mould (2) and/or the top mould are themselves divided.

12. Pressing mould according to one of claims 10 or 11, **characterised in that** the joint edges between the bottom mould (2) and top mould (3) or between the mould sections of the bottom mould (2) and/or top mould (3) are formed as steam outlet openings.

13. Pressing mould according to one of claims 10 to 12, **characterised in that** the steam outlet openings in the bottom mould and/or top mould are formed as channels (7) that have an initial opening (8) in the respective interior (9; 10) of the bottom mould and/or top mould (2; 3) and a second opening (11) to the respective exterior of the bottom mould and/or top mould (2; 3).

14. Pressing mould according to one of claims 10 to 13, **characterised in that** the initial opening (8) is formed so that the respective channel (7) is formed as a channel which is at least partially open to the respective interior (9; 10).

## Revendications

1. Procédé destiné à confectionner des corps moulés cuits composés d'une pâte ferme moulable et exempte de d'agent de fermentation confectionnée à l'aide de farine de céréale, ladite pâte étant cuite sous forme de pièce de pâte brute en forme de pastilles dans un moule à compression composé d'un moule inférieur et d'un moule supérieur, et étant cuite dans ce moule à compression,
- la séquence de cuisson présentant une phase de génération de la forme dans laquelle le moule inférieur et le moule supérieur (2 ; 3) en état préchauffé et tout en modelant la pièce de pâte brute (15) par pressage la transforment en corps moulé de pâte brute (16) et, par exercice d'une première force de pressage, sont rapprochés jusqu'à un écart correspondant à une épaisseur telle de la paroi du corps moulé de pâte brute (16) que le volume formé par l'écart est entièrement rempli par la matière de la pièce de pâte brute (15),
- la séquence de cuisson présentant une phase consécutive de précuisson au cours de laquelle la première force de pressage diminue ou se désactive, le moule inférieur et le moule supérieur (2 ; 3) s'éloignant l'un de l'autre d'une distance supplémentaire inférieure à l'écart, et qu'ensuite le corps moulé de pâte brute (16) subit une précuisson à une pression presque atmosphérique et
- la séquence de cuisson présentant ensuite une phase de compression dans laquelle le moule inférieur et le moule supérieur (2 ; 3), par exercice d'une seconde force de compression, se rapprochent du corps moulé de pâte brute (16) jusqu'à un écart correspondant à l'épaisseur de paroi du corps moulé (4) et le corps moulé de pâte brute (16) étant cuit dans cette position jusqu'à obtention du corps moulé (4).

2. Procédé selon la revendication 1, **caractérisé en ce que** la durée de la phase de compression est supérieure à la durée de la phase de précuisson, et que la durée de cette dernière est à son tour supérieure à la durée de la phase de génération de la forme.

3. Procédé selon la revendication 1 ou 2, **caractérisé en ce que** la seconde force de pressage est supérieure à la première.

4. Procédé selon l'une les revendications 1 à 3, **caractérisé en ce que** la température de cuisson dans le moule de compression (1) est comprise, au moins pendant la phase de cuisson avec compression, entre 160°C et 220°C.

5. Procédé selon la revendication 4, **caractérisé en ce que** la température de cuisson est comprise entre 180°C et 190°C.

6. Procédé selon l'une des revendications 1 à 5, **caractérisé en ce que** le moule de compression (1) est préchauffé, pendant la phase de génération de la forme, jusqu'à atteindre la température de cuisson.

7. Procédé selon l'une des revendications 1 à 6, **caractérisé en ce que** la température de cuisson pendant la phase de génération de la forme, la phase de précuisson et la phase de cuisson avec compression est maintenue pour l'essentiel constante.

8. Procédé selon l'une des revendications 1 à 7, **caractérisé en ce que** la durée de cuisson totale est comprise entre 2 et 6 minutes.

9. Procédé selon l'une des revendications 1 à 8, **caractérisé en ce que** la pâte présente une part de liquide d'approximativement 30 % volumiques.

10. Moule de compression destiné à exécuter le procédé selon l'une des revendications 1 à 9 et utilisant un moule inférieur (2) présentant une forme inverse de la face inférieure d'un corps moulé et un moule supérieur (3) présentant une forme inverse de la face supérieure du corps moulé, lequel moule supérieur se laisse, avec intercalage de la pièce de pâte brute, poser sur le moule inférieur (2), le moule inférieur (2) présentant des orifices de sortie de la vapeur et le moule supérieur (3) et le moule inférieur (2) étant, pendant le processus de cuisson, déplaçables et verrouillables relativement l'un à l'autre et de façon rectiligne, **caractérisé en ce que** le moule supérieur (3) est doté lui aussi d'orifices de sortie de vapeur, lesquels présentent un premier orifice (8) sur le côté intérieur concave (10) et un deuxième orifice (11) vers le côté extérieur du moule supérieur (3).

11. Moule de compression selon la revendication 10, **caractérisé en ce que** le moule inférieur (2) et/ou le moule supérieur (3) est/sont lui/eux-même(s) divisé(s).

12. Moule de compression selon l'une des revendications 10 ou 11, **caractérisé en ce que** les bordures jointives entre le moule inférieur (2) et la moule supérieur (3) ou entre les pièces moulées du moule inférieur (2) et/ou du moule supérieur (3) sont configurées en orifices de sortie de vapeur.

13. Moule de compression selon l'une des revendications 10 à 12, **caractérisé en ce que** les orifices de sortie de vapeur dans le moule inférieur et/ou dans le moule supérieur sont configurés en canaux (7) présentant un premier orifice (8) sur le côté intérieur respectif (9 ; 10) du moule inférieur et/ou supérieur (2 ; 3) et un deuxième orifice (11) vers le côté extérieur respectif du moule inférieur et/ou supérieur (2 ; 3).

14. Moule de compression selon l'une des revendications 10 à 13, **caractérisé en ce que** le premier orifice (8) est formé par le fait que le canal respectif (7) est configuré, vers le côté intérieur respectif (9 ; 10), en canal (14) au moins en partie ouvert.
